# EUROPÄISCHE PATENTSCHRIFT

(11) **EP 1 604 850 B1**
(45) Veröffentlichungstag und Bekanntmachung des Hinweises auf die Patenterteilung: **23.01.2008**
(21) Anmeldenummer: 05007809.6
(22) Anmeldetag: 08.04.2005
(51) Int. Cl.: B60H 1/22, F23N 5/20

(54) **Verfahren zum Betreiben eines brennstoffbetriebenen Fahrzeugheizgerätes**
Method for operating a fuel burning heater for a vehicle
Procédé de commande pour une chauffage autonomme d'un véhicule

(30) Priorität: 11.06.2004 DE 102004028304
(43) Veröffentlichungstag der Anmeldung: 14.12.2005
(73) Patentinhaber: J. Eberspächer GmbH & Co. KG, 73730 Esslingen (DE)
(72) Erfinder: Schmidt, Oliver, 73207 Plochingen (DE)
(74) Vertreter: Ruttensperger, Bernhard

(56) Entgegenhaltungen:
- DE-A1- 19 605 216
- DE-C1- 19 605 326
- US-A- 4 773 588

## Beschreibung

Die vorliegende Erfindung betrifft ein Verfahren zum Betreiben eines brennstoffbetriebenen Fahrzeugheizgerätes gemäß dem Oberbegriff des Anspruchs 1.

Derartige brennstoffbetriebene Heizgeräte werden beispielsweise als Standheizungen eingesetzt. Die bei der Verbrennung entstehende Wärme kann dazu genutzt werden, den Fahrzeuginnenraum zu erwärmen bzw. vorzuwärmen, und kann weiter genutzt werden, beispielsweise das Kühlmittel einer als Antriebsaggregat wirksamen Brennkraftmaschine vorzuwärmen. Beim Einsatz derartiger Standheizungen wird im Allgemeinen so vorgegangen, dass beispielsweise durch den Fahrer ein Schalter betätigt wird, der das Heizgerät in Betrieb setzt. Es läuft dann eine Startprozedur ab, bei der zunächst für eine vorbestimmte Zeitdauer von beispielsweise 20 Sekunden durch elektrische Erregung eine Heizanordnung, beispielsweise umfassend einen Glühzündstift o.dgl., aktiviert wird, um die zum Zünden, also zum Starten der Verbrennung erforderlichen thermischen Rahmenbedingungen bereitzustellen. Nach Ablauf dieser vorbestimmten Zeitdauer wird davon ausgegangen, dass diese Rahmenbedingungen, also ausreichend hohe Temperaturen, vorliegen und es wird dann beispielsweise durch Verbrennungslufteinspeisung und Brennstoffeinspeisung ein zündfähiges Gemisch aus Verbrennungsluft und Brennstoff bereitgestellt, das aufgrund der Tatsache, dass bereits ausreichend hohe Temperaturen vorliegen, im Allgemeinen dann zünden wird. In dieser zweiten Zünd- bzw. Verbrennungsphase wird dann durch anhaltendes Bereitstellen des verbrennungsfähigen Gemisches zunächst die Verbrennung stabilisiert und dann insoweit verändert, als die Heizleistung in Richtung zu einer Sollheizleistung, also beispielsweise einer maximal möglichen Heizleistung, verändert wird.

Aufgrund dieses im Allgemeinen fest vorgegebenen Procedere kann es zu Verzögerungen bei der Bereitstellung der Wärmeenergie kommen, die für einen Fahrer sich unangenehm bemerkbar machen. Betätigt der Fahrer beispielsweise einen entsprechenden Einschaltknopf im Fahrzeug dann, wenn er selbst bereits im Fahrzeug Platz genommen hat, so wird es ab dieser ersten Betätigung etwa eine halbe Minute dauern, bis das Heizgerät grundsätzlich in der Lage ist, Wärme bereitzustellen, um beispielsweise in den Fahrzeuginnenraum erwärmte Luft einleiten zu können.

Ein Verfahren gemäß dem Oberbegriff des Anspruchs 1 ist aus der DE 196 05 216 A1 bekannt. Bei diesem bekannten Verfahren wird in einer als Vorwärmphase bezeichneten Startphase eine Glüheinrichtung betrieben, um diese vorzuwärmen, d.h. auf eine zum nachfolgenden Zünden eines noch zu erzeugenden Gemisches aus Luft und Brennstoff geeignete Temperatur zu bringen. In einer darauf folgenden zweiten Startphase wird zusätzlich auch Brennstoff in eine Brennkammer eingespeist, um ein Gemisch aus Luft und Brennstoff bereitzustellen. Mit dem Beginn der Brennstoffeinspeisung wird auch die elektrische Leistung der Glüheinrichtung etwas gesenkt.

Es ist die Aufgabe der vorliegenden Erfindung, ein Verfahren zum Betreiben eines brennstoffbetriebenen Fahrzeugheizgerätes bereitzustellen, mit welchem Verzögerungen bei der Inbetriebnahme des Heizgerätes soweit als möglich vermieden werden.

Erfindungsgemäß kann diese Aufgabe gelöst werden durch ein Verfahren zum Betreiben eines brennstoffbetriebenen Fahrzeugheizgerätes, bei welchem bei einer Startprozedur in einer ersten Startphase vorbestimmter Zeitdauer eine elektrisch erregbare Heizanordnung betrieben wird und in einer zweiten Startphase nach Ablauf der ersten Startphase ein zündfähiges Brennstoff/Luft-Gemisch zum Starten der Verbrennung bereitgestellt wird, wobei die Startprozedur mit der ersten Startphase bei Vorliegen einer Startinformation gestartet wird und nach Ablauf der ersten Startphase in die zweite Startphase nur dann übergegangen wird, wenn eine Übergangsfreigabeinformation vorliegt.

Durch den zweistufigen Entscheidungsprozess bei dem erfindungsgemäßen Verfahren wird es möglich, bereits antizipierend den Start eines Heizgerätes anzustoßen, wobei dieses Anstoßen durch das Bereitstellen der Startinformation erfolgt. Erst dann, wenn zusätzlich auch noch die Übergangsfreigabeinformation vorliegt, also eine Information, die darauf hindeutet, dass mit allergrößter Wahrscheinlichkeit das Fahrzeug tatsächlich auch betrieben werden soll, wird die Startprozedur zur weiteren Durchführung freigegeben, d.h. es kann dann auch in die zweite Startphase eingetreten werden, in der die Verbrennung dann beginnen wird. Mit einer derartigen Vorgehensweise kann also bereits früher mit der Startprozedur begonnen werden, nämlich dann, wenn eine Information vorliegt, die mit einer gewissen Wahrscheinlichkeit darauf hindeutet, dass nachfolgend der Betrieb des Heizgeräts erforderlich sein wird. Diese Wahrscheinlichkeit kann aber noch geringer sein, als diejenige Wahrscheinlichkeit, mit welcher die Übergangsfreigabeinformation auf die tatsächliche Notwendigkeit des Betreibens des Heizgerätes hindeutet.

Bei dem erfindungsgemäßen Verfahren kann weiter vorgesehen sein, dass dann, wenn nach Ablauf der vorbestimmten Zeitdauer die Übergangsfreigabeinformation nicht vorliegt, die erste Startphase maximal bis zum Ablauf eines Verlängerungszeitintervalls fortgesetzt wird. Auf diese Art und Weise kann sichergestellt werden, dass ein übermäßig langes Erregen der elektrisch erregbaren Heizanordnung nicht stattfindet. Gleichwohl wird sichergestellt, dass nicht bereits dann, wenn grundsätzlich durch ausreichend lange Erregung der Heizanordnung die Zündung erfolgen könnte, eine entsprechende Freigabe aber noch nicht vorliegt, die Startprozedur wieder abgebrochen wird und ggf. erneut begonnen werden muss. Dabei kann weiter vorgesehen sein, dass dann, wenn nach Ablauf der vorbestimmten Zeitdauer die Übergangsfreigabeinformation nicht vorliegt, die erste Startphase bis zum Vorliegen der Übergangsfreigabeinformation fortgesetzt wird.

Liegt innerhalb der erforderlichen Zeit die Übergangsfreigabeinformation nicht vor, kann erfindungsgemäß vorgesehen sein, dass nach Ablauf des Verlängerungszeitintervalls ohne Vorliegen der Übergangsfreigabeinformation die Erregung der elektrisch erregbaren Heizanordnung beendet wird.

Die Startinformation kann beispielsweise Information darüber umfassen,
- dass eine Fahrzeugtüre entriegelt worden ist oder/und
- dass eine Fahrzeugtüre geöffnet worden ist oder/und
- dass ein Fahrzeugsitzplatz belegt worden ist oder/und
- dass eine Fahrzeugtüre geschlossen worden ist oder/und
- dass ein Gurtschloss verriegelt worden ist.

Dies sind alles Ereignisse, die mit gewisser Wahrscheinlichkeit darauf hindeuten, dass ein Fahrer die Aufnahme der Nutzung des Fahrzeugs beabsichtigt.

Weiter kann vorgesehen sein, dass die Übergangsfreigabeinformation Information darüber umfasst,
- dass ein Fahrzeugsitzplatz belegt worden ist oder/und
- dass ein Gurtschloss verriegelt worden ist oder/und
- dass ein Fahrzeugantriebsaggregat gestartet worden ist.

Dies sind Ereignisse, die mit höherer Wahrscheinlichkeit die Nutzungsaufnahme des Fahrzeugs indizieren. So ist im Allgemeinen davon auszugehen, dass ein Fahrer im Fahrzeug nur dann Platz nehmen wird, wenn er tatsächlich auch wegfahren will. Selbiges gilt für die Verriegelung des Gurtschlosses und gilt insbesondere für das Starten eines Antriebsaggregats.

Um ein unnötiges Betreiben eines Heizgeräts ausschließen zu können, und zwar auch dann, wenn sowohl die Startinformation als auch die Übergangsfreigabeinformation vorliegt, wird weiterhin vorgeschlagen, dass bei Vorliegen der Startinformation die Startprozedur nur dann gestartet oder/und fortgesetzt wird, wenn eine Startfreigabeinformation vorliegt. Dabei kann beispielsweise vorgesehen sein, dass die Startfreigabeinformation Information darüber umfasst,
- dass die Temperatur eines zu erwärmenden Mediums, vorzugsweise eines Kühlmittels eines Fahrzeugantriebsaggregats, unter einer zugeordneten Grenztemperatur liegt oder/und
- dass die Temperatur in einem Fahrzeuginnenraum unter einer zugeordneten Grenztemperatur liegt oder/und
- dass von einem elektrischen Energieversorgungssystem ausreichend elektrische Energie bereitgestellt werden kann.

Die vorliegende Erfindung wird nachfolgend mit Bezug auf die beiliegenden Zeichnungen detailliert beschrieben. Es zeigt:
- Fig. 1: eine Prinzip-Ansicht eines Fahrzeugs, bei dem die Erfindung implementiert sein kann;
- Fig. 2: eine Tabelle, die den Ablauf einer erfindungsgemäß durchzuführenden Startprozedur veranschaulicht;
- Fig. 3: eine der Fig. 2 entsprechende Tabelle einer alternativen Ausgestaltungsart.

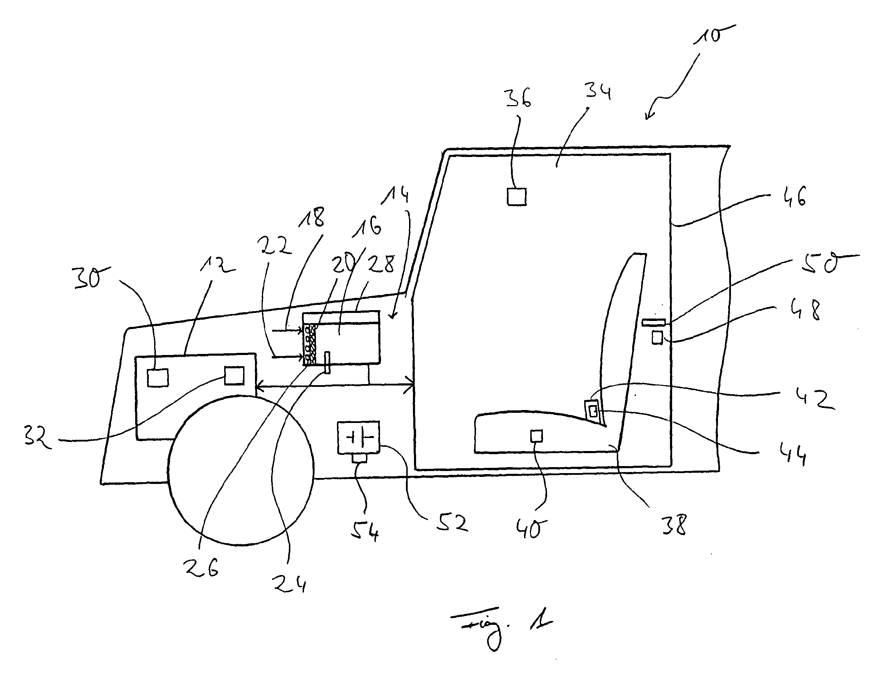

In Fig. 1 ist ein schematisch dargestelltes Fahrzeug allgemein mit 10 bezeichnet. Dieses Fahrzeug umfasst als Antriebsaggregat beispielsweise eine Brennkraftmaschine 12, und umfasst weiterhin ein allgemein mit 14 bezeichnetes brennstoffbetriebenes Heizgerät. Dieses umfasst eine Brennkammer 16, in welche durch eine schematisch angedeutete Brennstoffzufuhr 18 zunächst flüssiger Brennstoff beispielsweise in ein poröses Verdampfermedium 20 eingeleitet werden kann.

Ferner wird durch eine ebenfalls nur schematisch angedeutete Verbrennungsluftzufuhr, die zur Erzeugung eines zündfähigen bzw. verbrennungsfähigen Gemisches erforderliche Verbrennungsluft eingeleitet. Um die Verbrennung starten zu können, ist ein Zündorgan 24, beispielsweise in Form eines Glühzündstiftes, vorhanden. Bei Ausgestaltung des Heizgerätes 14 als Verdampferbrenner mit dem bereits angesprochenen porösen Verdampfermedium 20 kann diesem eine nach Art einer Heizwendel ausgestaltete Heizeinrichtung 26 zugeordnet sein, um insbesondere in der Startphase die Brennstoffabdampfung zu unterstützen. Dem Heizgerät 14 ist ferner ein allgemein mit 28 bezeichnetes Steuergerät zugeordnet, das beruhend auf nachfolgend auch noch beschriebenen Sensoreingaben grundsätzlich den Betrieb des Heizgeräts 14 steuert.

In dem Fahrzeug 10 sind verschiedene Sensoren vorhanden. So ist beispielsweise in Zuordnung zum Antriebsaggregat bzw. zur Brennkraftmaschine 12 eine Sensorik 30 vorhanden, die Information darüber liefert, dass bzw. ob diese gestartet worden ist. Diese Sensorik 30 kann also allgemein das Drehen des Zündschlüssels bzw. den daraufhin fließenden Strom o.dgl. erfassen. Weiter kann ein Temperatursensor 32 vorgesehen sein, der in Zuordnung zur Brennkraftmaschine 12 die Temperatur des Kühlmittels derselben erfasst. In einem Fahrzeuginnenraum 34 kann ein Temperatursensor 36 vorgesehen sein, der die Innenraumtemperatur erfasst, und es kann in Zuordnung zu einem Sitz, insbesondere zum Fahrersitz 38, ein Sitzbelegungssensor 40 vorgesehen sein, der erfasst, ob der Sitz 38 belegt ist bzw. bei Belegung ein entsprechendes Signal bzw. entsprechende Information bereitstellt. Ferner kann in Zuordnung zu einem Gurtschloss 42 ein Gurtschlosssensor 44 vorgesehen sein, der erfasst, dass bzw. ob der Sicherheitsgurt geschlossen, also angelegt worden ist und somit das Gurtschloss 42 verriegelt worden ist. In Zuordnung zu einer Fahrzeugtüre, beispielsweise Fahrertüre 46, kann eine Sensorik 48 vorgesehen sein, die dazu ausgebildet sein kann, zu erfassen, dass bzw. ob beispielsweise durch Fernbedienung das Türschloss 50 entriegelt worden ist oder/und ob die Türe geöffnet bzw. geschlossen worden ist. Hierzu können jeweils verschiedene Sensorbereiche vorgesehen sein, die einerseits den Verriegelungszustand des Zentralverriegelungssystems oder auch nur einer Türe erfassen können und die andererseits den Betätigungszustand der Türe, also das Öffnen oder Schließen derselben, erfassen können.

All diese Sensorsignale können im Steuergerät 28 dazu genutzt werden, den Betrieb des Heizgeräts 14 in geeigneter Weise zu steuern. Es bestehen also zwischen den verschiedenen Sensoren und dem Steuergerät 28 Informationsaustauschverbindungen, beispielsweise über ein Datenbussystem. Ferner sei darauf hingewiesen, dass die verschiedenen elektrisch erregbaren Systembereiche gespeist werden können aus einem Bordspannungssystem 52, beispielsweise einer Batterie, dem selbstverständlich auch eine Sensorik 54 zum Überwachen des Spannungszustands zugeordnet sein kann.

Gemäß der vorliegenden Erfindung kann das Heizgerät 14 so betrieben werden, dass in einem zweistufigen Entscheidungsprozess die verschiedenen bei einer Startprozedur ablaufenden Phasen ausgelöst werden. Die erste dieser Phasen umfasst das thermische Konditionieren des Heizgeräts 14, insbesondere der Brennkammer 16, um dort ausreichend hohe Temperaturen bereitstellen zu können, so dass nachfolgend eine Zündung erfolgen wird. Dies involviert im Allgemeinen die Erregung des Zündorgans 24 durch entsprechende Bestromung, und kann in unterstützender Art und Weise auch die Erregung der Heizeinrichtung 26 umfassen. Diese erste Startphase der Startprozedur wird dann ausgelöst, wenn entsprechende Startinformation vorliegt, die darauf hindeutet, dass mit einer gewissen Wahrscheinlichkeit das Fahrzeug 10 demnächst in Betrieb genommen wird. Beispielsweise kann diese Information durch Auswertung der Sensorsignale der Sensorik 48 erfolgen, also beispielsweise durch Erfassen, ob ein Türschloss entriegelt worden ist. Wird durch die Sensorik 48 ein Signal geliefert, das auf das Entriegeln hindeutet, so kann dann das Steuergerät 28 die Systembereiche 24 oder/und 26 ansteuern, um diese zu erregen und somit eine erste Startphase zu initiieren. Diese erste Startphase, die bis zur ausreichenden Vorerwärmung des Heizgeräts 14 erforderlich ist, dauert im Allgemeinen etwa 20 Sekunden. Das heißt, dass diese Zeitdauer von etwa 20 Sekunden bei der erfindungsgemäßen Startprozedur vorgegeben ist. Erfolgt innerhalb dieser 20 Sekunden keine weitere Manipulation am Fahrzeug 10 oder keine weitere Änderung des Zustands desselben, so kann nach Ablauf dieser Zeitdauer von beispielsweise 20 Sekunden noch für ein vorbestimmtes Sicherheitsintervall abgewartet werden, ob diese Änderung des Zustands noch eintritt. Dieses Intervall kann beispielsweise 10 - 20 Sekunden lang sein. Erfolgt eine weitere Zustandsänderung, die verstärkt auf die nachfolgend beabsichtigte Inbetriebnahme hindeutet, nicht, so kann am Ende dieses Sicherheitsintervalls dann die Erregung des Zündorgans 24 bzw. der Heizeinrichtung 26 beendet werden, so dass durch übermäßig langes Bestromen derselben einerseits nicht die Gefahr einer Beschädigung besteht und andererseits nicht unnötig Energie verbraucht wird.

Erfolgt jedoch noch vor Ablauf der vorbestimmten Zeitdauer für die erste Startphase, also beispielsweise noch vor 20 Sekunden, die Bereitstellung von Übergangsfreigabeinformation, so wird dann, wie nachfolgend noch beschrieben, in der Brennkammer 16 das erforderliche Brennstoff/Luft-Gemisch bereitgestellt und somit die Verbrennung gestartet. Diese Übergangsfreigabeinformation kann beispielsweise dadurch bereitgestellt werden, dass durch den Sensor 40 erfasst wird, dass eine Person auf dem Sitz 38 Platz genommen hat. Auch das Öffnen der Tür 46 oder das Wiederschließen der Tür 46 kann als verstärkter Hinweis auf die beabsichtigte Nutzungsaufnahme interpretiert werden und die Grundlage für die Übergangsfreigabeinformation bilden. Schließlich kann auch das Verriegeln des Gurtschlosses 42 bzw. das Starten der Brennkraftmaschine 12, jeweils erfasst durch die zugeordneten Sensoren 44, 30, als Übergangsfreigabeinformation bzw. als Grundlage dafür interpretiert werden, um nach Erzeugung entsprechender Sensorsignale dann das zünd- bzw. verbrennungsfähige Gemisch in der Brennkammer 16 bereitzustellen und somit die zweite Startphase, in welcher die Verbrennung gestartet, stabilisiert und zum Erreichen der Sollheizleistung hochgefahren wird, zu beginnen.

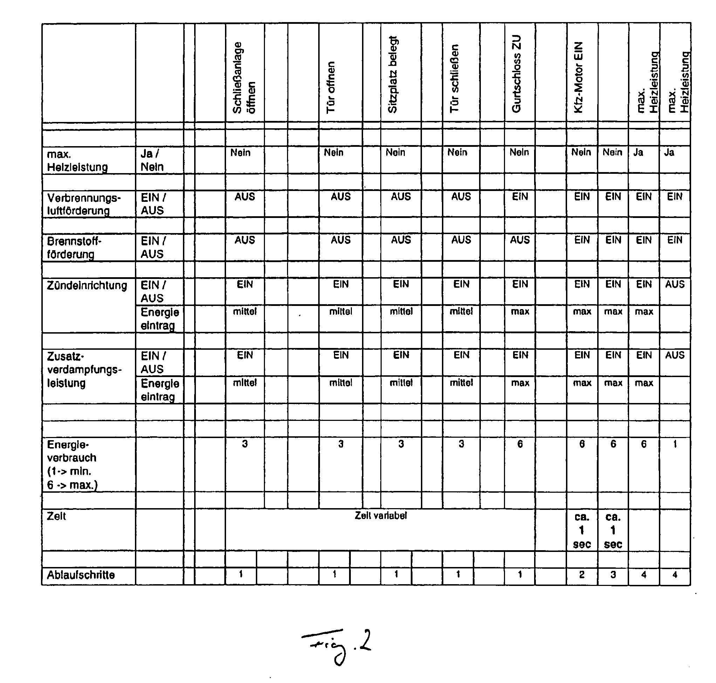

Die erfindungsgemäße Vorgehensweise beim Starten eines Fahrzeugs wird nachfolgend mit Bezug auf die Fig. 2 anhand eines beispielhaften Ablaufs detaillierter erläutert. Man erkennt zunächst in Fig. 2 in der linken Spalte untereinander geschrieben die verschiedenen anzusteuernden Systembereiche bzw. einzustellenden Größen. In der ersten Zeile sind diejenigen Systembereiche des Fahrzeugs 10 angesprochen, die durch Bereitstellen von Sensorsignalen Information dafür liefern können, ob bzw. welche der Startphasen begonnen werden kann. So ist der erste Schritt bei der Inbetriebnahme des Fahrzeugs im Allgemeinen das Öffnen der Schließanlage, d.h. das Entriegeln des Schlosses 50 bzw. der Schlösser 50, was durch ein entsprechendes Sensorsignal des Sensors 48 bekanntgegeben wird. Man erkennt in Fig. 2, dass zum Zeitpunkt der Entriegelung noch keine Heizleistung abgefordert wird, d.h. keine Verbrennung stattfinden soll und insofern auch keine Verbrennungsluft und kein Brennstoff in die Brennkammer 16 gefördert werden. Mit dem Öffnen der Schließanlage wird jedoch indiziert, dass mit bestimmter Wahrscheinlichkeit das Fahrzeug 10 in Betrieb genommen wird, so dass dies auch als Startinformation interpretiert wird und nunmehr das Zündorgan 24 eingeschaltet wird und mit mittlerer Zündheizleistung erregt wird. Um die erste Startphase, also die zum Vorwärmen erforderliche Startphase, so kurz als möglich halten zu können, insbesondere bei vergleichsweise niedrigen Außentemperaturen, wird gleichzeitig auch die Heizeinrichtung 26 eingeschaltet, in Fig. 2 als Zusatzverdampfungsleistung kenntlich gemacht.

Die nächste Phase in der Inbetriebnahme des Fahrzeugs ist das Öffnen der Türe und das Einsteigen zumindest eines Fahrers. Auch dies wird sensorisch erfasst, nämlich durch die Sensoren 48 und 40. Hat der Fahrer Platz genommen, so wird er im Allgmeinen die Türe wieder schließen, was wiederum durch den Sensor 48 erfasst werden kann. In dieser Phase ändert sich zunächst an der Ansteuerung des Heizgeräts 14 nichts, d.h. es dauert immer noch die erste Startphase an, in welcher die beiden elektrisch erregbaren Systembereiche, nämlich das Zündorgan 24 und die Heizeinrichtung 26, betrieben werden. Die nächste Aktion wird das Anlegen des Sicherheitsgurts sein, erfassbar durch den Sensor 44. Zu diesem Zeitpunkt wird zwar noch keine Heizleistung abgefordert, es kann jedoch bereits antizipierend die Verbrennungsluftversorgung 18, also ein zugeordnetes Gebläse, aktiviert werden, um bereits einen gewissen Luftstrom zur Verfügung zu stellen.

Lässt dann der Fahrer die Brennkraftmaschine 12 an, was durch den Sensor 30 erfasst werden kann, so wird dies nunmehr als unzweifelhaftes Indiz dafür gewertet, dass tatsächlich das Fahrzeug 10 in Betrieb genommen werden soll und der Fahrer zu fahren wünscht. Dies bedeutet also, dass nunmehr auch die Übergangsfreigabeinformation, hier beispielsweise in Form des Sensorsignals des Sensors 30, vorliegt und nunmehr die zweite Startphase begonnen hat. In dieser zweiten Startphase wird nunmehr auch Brennstoff in die Brennkammer 16 bzw. das poröse Verdampfermedium 20 gefördert, um in der Brennkammer 16 das zündfähige Gemisch aus Verbrennungsluft und Brennstoffdampf bereitzustellen. Um die Zündung so schnell als möglich zu erhalten, wird soviel als möglich elektrische Energie genutzt, um Wärme zu erzeugen, d.h. das Zündorgan 24 und die Heizeinrichtung 26 werden mit maximaler Heizleistung betrieben, was bereits auch mit dem Schließen des Gurtschlosses 42 ausgelöst worden sein kann. Ist nunmehr das zündfähige Gemisch in der Brennkammer vorhanden und ist die Temperatur ausreichend hoch, wird auch die Zündung auftreten. Ab dem Einleiten von flüssigem Brennstoff ist hierfür eine Zeitdauer von etwa 1 Sekunde erforderlich. In einer daran anschließenden weiteren Phase wird zunächst bei unveränderter Ansteuerung die Verbrennung stabilisiert und dann die Heizleistung in Richtung maximaler Heizleistung erhöht. In dieser Phase bleiben zunächst noch die elektrisch erregten Bereiche, nämlich die Heizeinrichtung 26 und das Zündorgan 24, erregt, um das Hochfahren auf maximale Heizleistung so schnell als möglich durchführen zu können. Ist diese erreicht, können diese beiden elektrisch erregbaren Systembereiche nunmehr ausgeschaltet werden, und es verbleibt lediglich die andauernde Einleitung von flüssigem Brennstoff und Verbrennungsluft, um nunmehr im normalen Verbrennungsbetrieb im Heizgerät 14 Wärme bereitstellen zu können.

Da die Zeitdauer vom Öffnen der Schließanlage bis zum Anlassen der Brennkraftmaschine 12, also vom Bereitstellen der Startinformation bis zum Bereitstellen der Übergangsfreigabeinformation, variabel ist und davon abhängt, wie schnell ein Fahrer die verschiedenen Aktionen vornimmt, könnte grundsätzlich die Situation auftreten, dass die Brennkraftmaschine 12 bereits angelassen wird, bevor im Bereich der Brennkammer 16 ausreichend hohe Temperaturen zum Zünden vorliegen. Es kann daher vorgesehen sein, dass die Zeitdauer für die erste Startphase, also vom Bereitstellen der Startinformation bis zum Übergang in die zweite Startphase, also zum Einleiten von flüssigem Brennstoff, fest vorgegeben wird, beispielsweise im Bereich von 20 Sekunden, wobei diese Größe sich selbstverständlich abhängig von äußeren Bedingungen, wie z.B. der Umgebungstemperatur, ändern kann. Das Bereitstellen der Übergangsfreigabeinformation wird dann, wenn es bereits vor Ablauf dieser Zeitdauer erfolgt, lediglich als Bestätigung dafür genutzt, dass mit der an sich fest vorgegebenen Startprozedur, also Vorwärmen für ca. 20 Sekunden und dann Beginnen der Verbrennung, normal fortgefahren werden kann. Das heißt, es wird nicht sofort bei Vorliegen der Übergangsfreigabeinformation auch flüssiger Brennstoff eingeleitet, da nicht sichergestellt ist, dass bereits ausreichend hohe Temperaturen vorliegen. Liegt am Ende der vorbestimmten Zeitdauer von beispielsweise 20 Sekunden die Übergangsfreigabeinformation noch nicht vor, so kann dies daran liegen, dass ein Fahrer vor dem Anlassen der Brennkraftmaschine 12 noch andere Handhabungsvorgänge vornimmt. Es kann dann nach Verstreichen dieser fest vorgegebenen Zeitdauer beispielsweise noch für ein Sicherheitszeitintervall abgewartet werden, ob die Brennkraftmaschine 12 noch angelassen wird, also die Freigabe für den Übergang in die nächste Startphase des Heizgeräts 14 erfolgt. Gibt der Sensor 30 im Verlaufe dieses Sicherheitszeitintervalls ein das Anlassen der Brennkraftmaschine 12 repräsentierendes Signal aus, so kann dann unmittelbar in die zweite Startphase übergegangen werden und durch Brennstoffeinleitung nunmehr die Verbrennung gestartet werden. Erfolgt das Anlassen der Brennkraftmaschine 12 nicht innerhalb dieses Sicherheitszeitintervalls, so kann am Ende dieses Intervalls entschieden werden, dass mit größter Wahrscheinlichkeit doch kein Fahrbetrieb des Fahrzeugs gewünscht wird und insofern auch das Betreiben des Heizgeräts 14 nicht erforderlich ist. Das heißt, dass dann auch die elektrische Erregung des Heizorgans 24 bzw. Heizeinrichtung 26 beendet werden kann, um den übermäßigen Verbrauch elektrischer Energie zu vermeiden.

Es sei darauf hingewiesen, dass insbesondere in dem angesprochenen Sicherheitszeitintervall, in welchem an sich bereits ausreichend hohe Temperaturen zum Zünden vorliegen sollten, die Erregung des Zündorgans 24 bzw. der Heizeinrichtung 26 geschwächt werden kann, also mit verminderter elektrischer Leistung geheizt werden kann, da in dieser Phase im Prinzip nur ein stationärer Zustand beibehalten werden muss und kein weiteres Erhöhen der Temperatur erforderlich ist. Auch dies kann zum Senken des Energieverbrauchs beitragen. Auch ist beispielsweise ein gestuftes Absenken der Heizleistung des Zündorgans 24 bzw. Heizeinrichtung 26 mit zunehmendem Fortdauern des Sicherheitszeitintervalls möglich, ggf. bis zum vollständigen Beenden der Erregung.

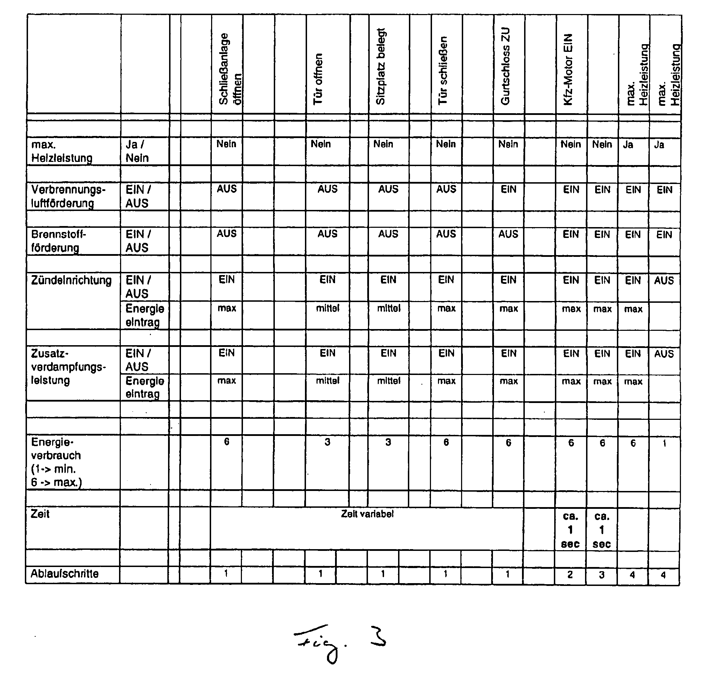

In Fig. 3 ist eine Prozedur gezeigt, die grundsätzlich der vorangehenden Prozedur entspricht, bei der jedoch beispielsweise bedingt dadurch, dass niedrigere Außentemperaturen vorliegen, in der ersten Startphase, also bis zum Bereitstellen der Übergangsfreigabeinformation, die elektrische Heizleistung phasenweise erhöht ist. So wird ganz zum Beginn, also mit Bereitstellen der Startinformation, das Zündorgan 24 bzw. auch die Heizeinrichtung 26 mit maximaler Heizleistung betrieben, um möglichst schnell ein Hochfahren der Temperatur zu erlangen. Nach einem vorübergehenden Absenken der Heizleistung kann dann beispielsweise mit Bereitstellen der Information, dass die Tür wieder geschlossen worden ist, was bedeutet, dass der Zeitpunkt der Inbetriebnahme der Brennkraftmaschine 12 näher rückt, auch die Heizleistung wieder erhöht werden, um durch entsprechenden Energieeintrag sicherzustellen, dass eine ausreichend hohe Temperatur im Bereich der Brennkammer 16, insbesondere in dem das Zündorgan 24 umgebenden Volumenbereich vorliegt.

Es sei darauf hingeweisen, dass selbstverständlich die vorangehend beschriebene Prozedur in verschiedensten Aspekten anders ablaufen kann. So können andere Signale bzw. Informationen als Startinformation interpretiert werden. Beispielsweise kann das Öffnen der Türe, das Platznehmen eines Fahrers, das Schließen der Türe oder das Schließen des Gurtschlosses als Startinformation interpretiert werden. Auch eine Kombination verschiedener Signale bzw. Informationen kann als Startinformation interpretiert werden. So könnte beispielsweise die Startinformation dann vorliegen bzw. dann bereitgestellt werden, wenn die Tür geschlossen worden ist und auch das Gurtschloss verriegelt worden ist, d.h. der Gurt angelegt worden ist. Auch die Übergangsfreigabeinformation kann durch andere Signale repräsentiert werden bzw. auf Grundlage anderer Signale bereitgestellt werden. So könnte bereits das Schließen der Türe oder das Verriegeln des Gurtschlosses als derartige Freigabeinformation interpretiert werden. Insbesondere im Falle des Schließens der Türe könnte es sinnvoll sein, zusätzlich auch noch die Sitzplatzbelegung abzufragen, da grundsätzlich auch der Fall vorliegen könnte, dass nach dem Öffnen der Türe diese wieder geschlossen wird, ohne dass eine Person in das Fahrzeug eingestiegen ist. Demgegenüber ist davon auszugehen, dass das Gurtschloss tatsächlich nur dann verriegelt wird, wenn eine Person im Fahrzeug Platz genommen hat und tatsächlich auch das Fahrzeug in Betrieb nehmen will.

Weiter ist es selbstverständlich möglich, die Durchführung der Startprozedur nur dann freizugeben, wenn bestimmte Rahmenbedingungen vorliegen. Es ist beispielsweise nicht erforderlich, das Heizgerät 14 zum Bereitstellen von Wärmeenergie zu betreiben, wenn die Temperatur im Fahrzeuginnenraum 34 ausreichend hoch ist bzw. die Temperatur des Kühlmittels der Brennkraftmaschine 12 ausreichend hoch ist. Weisen beispielsweise beide Sensorsignale der Sensoren 32 und 36 auf über jeweiligen Grenztemperaturen liegende Temperaturen hin, so kann grundsätzlich das Heizgerät 14 gegen Betreiben gesperrt werden. Ist in einem der Bereiche eine nicht ausreichend hohe Temperatur vorhanden, so kann das Heizgerät 14 zwar in Betrieb gesetzt werden, möglicherweise aber mit verminderter Heizleistung. Auch der Zustand der elektrischen Energieversorgung kann als Entscheidungsparameter dafür herangezogen werden, ob bzw. in welcher Art die Startprozedur durchgeführt wird. Ist das Bordspannungssystem 52 in einem vergleichsweise schlechten Ladezustand, der das korrekte Durchführen der Startprozedur und insbesondere auch das nachfolgende Anlassen der Brennkraftmaschine 12 nicht gewährleistet, so kann das Betreiben des Heizgeräts 14 unterdrückt werden. Ist der Ladezustand in einem mittleren Zustand, so kann die Startprozedur zwar freigegeben werden, aber beispielsweise mit verminderter elektrischer Heizleistung, um eine Überlastung des Bordspannungssystems zu vermeiden. Wird im Verlaufe der Startprozedur erkannt, dass die Spannung zusammenbricht, also nicht mehr ausreichend elektrische Energie bereitgestellt werden kann, insbesondere auch dafür ausreichend, dass die Brennkraftmaschine 12 noch gestartet werden kann, so kann die Startprozedur abgebrochen werden. Weiter kann beispielsweise während der Startprozedur so vorgegangen werden, dass die Heizeinrichtung 26 nur dann zusätzlich betrieben wird, wenn sichergestellt ist, dass ausreichend elektrische Energie bereitgestellt werden kann. All diese im Zusammenhang mit der Leistungsfähigkeit des Bordspannungssystems 52 stehenden Informationen können bereitgestellt werden durch die Sensorik 54, die entsprechende Signale oder ein entsprechendes Signal an das Steuergerät 28 liefert. Wird beispielsweise nach Erzeugen der Startinformation beruhend auf dem Öffnen der Schließanlage, erfasst durch den Sensor 48, nicht erfasst, dass eine Person im Fahrzeug Platz genommen hat, so kann eine Anpassung der elektrischen Heizleistung dahingehend vorgenommen werden, dass diese vermindert wird, da davon auszugehen ist, dass grundsätzlich dann mehr Zeit für die Startprozedur vorhanden ist. Schließlich kann das Fahrzeug nur dann in Betrieb genommen werden bzw. mit dem Fahrbetrieb begonnen werden, wenn ein Fahrer im Fahrzeug sitzt. Insbesondere könnte in diesem Zustand auch das Sicherheitszeitintervall etwas verlängert werden, um durch Beibehalten der das Zünden gewährleistenden Temperaturen in der Brennkammer 16 in einem stationären Zustand bei verringertem Eintrag elektrischer Energie die Möglichkeit, die Verbrennung zu starten, über einen längeren Zeitraum zu erhalten. Selbiges gilt auch dafür, dass beispielsweise zwar eine Person im Fahrzeug Platz genommen hat, aber das Gurtschloss 42 nicht verriegelt worden ist. Auch das Schließen bzw. noch nicht erfasste Schließen der Tür, insbesondere der Fahrertür, kann als Auslöser für das Übergehen in einen "Energiesparmodus" mit verringertem Eintrag elektrischer Energie genutzt werden. Wird das Schließen der Tür erfasst, so kann dann in einen normalen Betrieb mit beispielsweise maximaler elektrischer Heizleistung übergegangen werden.

Auch beim Abschalten des Heizgeräts 14 kann in ähnlicher Art und Weise vorgegangen werden. So kann beispielsweise das Heizgerät beim Anhalten des Fahrzeugs und Abstellen der Brennkraftmaschine 12 noch weiter betrieben werden, beispielsweise mit geringer Verbrennungsheizleistung, solange beispielsweise der Fahrer noch im Fahrzeug sitzt, also der Sensor 40 ein entsprechendes Signal liefert oder/und auch das Gurtschloss 42 verriegelt ist bzw. auch die Türe 46 noch geschlossen ist. Erst wenn dann tatsächlich durch entsprechende Signale indiziert wird, dass der Fahrer das Fahrzeug auch verlässt, also beispielsweise der Gurt entriegelt worden ist, die Sitzbelegung auf das Aussteigen hindeutet bzw. die Türe geöffnet worden ist, kann dann das Heizgerät in seinen Aus-Zustand überführt werden.

Weiter ist es selbstverständlich möglich, dass bei bereits im Verbrennungsbetrieb befindlichem Heizgerät 14 zum Sparen von Energie auf verschiedene Informationen reagiert wird. So kann beispielsweise dann, wenn erkannt wird, dass die Fahrertür oder eine sonstige Fahrzeugtür geöffnet ist, die Heizleistung heruntergefahren werden.

Durch die erfindungsgemäße Prozedur, die zur Aufnahme des Verbrennungsbetriebs im Heizgerät 14 das gestufte Vorliegen mehrerer Informationen, insbesondere der Startinformation und danach der Übergangsfreigabeinformation, erfordert, wird es möglich, den Beginn der Startprozedur deutlich nach vorne zu verlegen, so dass möglichst rasch und mit möglichst großer Zuverlässigkeit dann, wenn das Fahrzeug in Betrieb genommen wird, auch ausreichend Wärmeenergie bereitgestellt werden kann, d.h. die Verbrennung zuverlässig auch rechtzeitig gestaltet werden kann. Es sind grundsätzlich dann keine weiteren Interaktionen des Fahrers erforderlich, um das Heizgerät in Betrieb zu nehmen. Außerdem wird es möglich, das Heizgerät 14 mit sehr großer Effizienz, also mit möglichst geringem Energieverbrauch zu betreiben.

## Patentansprüche

1. Verfahren zum Betreiben eines brennstoffbetriebenen Fahrzeugheizgerätes (14), bei welchem bei einer Startprozedur in einer ersten Startphase vorbestimmter Zeitdauer eine elektrisch erregbare Heizanordnung (24, 26) betrieben wird und in einer zweiten Startphase nach Ablauf der ersten Startphase ein zündfähiges Brennstoff/Luft-Gemisch zum Starten der Verbrennung bereitgestellt wird, wobei die Startprozedur mit der ersten Startphase bei Vorliegen einer Startinformation gestartet wird **dadurch gekennzeichnet, dass** nach Ablauf der ersten Startphase in die zweite Startphase nur dann übergegangen wird, wenn eine Übergangsfreigabeinformation vorliegt.

2. Verfahren nach Anspruch 1,
**dadurch gekennzeichnet, dass** dann, wenn nach Ablauf der vorbestimmten Zeitdauer die Übergangsfreigabeinformation nicht vorliegt, die erste Startphase maximal bis zum Ablauf eines Verlängerungszeitintervalls fortgesetzt wird.

3. Verfahren nach Anspruch 2,
**dadurch gekennzeichnet, dass** dann, wenn nach Ablauf der vorbei stimmten Zeitdauer die Übergangsfreigabeinformation nicht vorliegt, die erste Startphase bis zum Vorliegen der Übergangsfreigabeinformation fortgesetzt wird.

4. Verfahren nach Anspruch 2 oder 3,
**dadurch gekennzeichnet, dass** nach Ablauf des Verlängerungszeitintervalls ohne Vorliegen der Übergangsfreigabeinformation die Erregung der elektrisch erregbaren Heizanordnung (24, 26) beendet wird.

5. Verfahren nach einem der Ansprüche 1 bis 4,
**dadurch gekennzeichnet, dass** die Startinformation Information darüber umfasst,
- dass eine Fahrzeugtüre (46) entriegelt worden ist oder/und
- dass eine Fahrzeugtüre (46) geöffnet worden ist oder/und
- dass ein Fahrzeugsitzplatz (38) belegt worden ist oder/und
- dass eine Fahrzeugtüre (46) geschlossen worden ist oder/und
- dass ein Gurtschloss (42) verriegelt worden ist.

6. Verfahren nach einem der Ansprüche 1 bis 5,
**dadurch gekennzeichnet, dass** die Übergangsfreigabeinformation Information darüber umfasst,
- dass ein Fahrzeugsitzplatz (38) belegt worden ist oder/und
- dass ein Gurtschloss (42) verriegelt worden ist oder/und
- dass ein Fahrzeugantriebsaggregat (12) gestartet worden ist.

7. Verfahren nach Anspruch 6,
**dadurch gekennzeichnet, dass** bei Vorliegen der Startinformation die Startprozedur nur dann gestartet oder/und fortgesetzt wird, wenn eine Startfreigabeinformation vorliegt.

8. Verfahren nach Anspruch 7,
**dadurch gekennzeichnet, dass** die Startfreigabeinformation Information darüber umfasst,
- dass die Temperatur eines zu erwärmenden Mediums, vorzugsweise eines Kühlmittels eines Fahrzeugantriebsaggregats (12), unter einer zugeordneten Grenztemperatur liegt oder/und
- dass die Temperatur in einem Fahrzeuginnenraum (34) unter einer zugeordneten Grenztemperatur liegt oder/und
- dass von einem elektrischen Energieversorgungssystem (52) ausreichend elektrische Energie bereitgestellt werden kann.

## Claims

1. A method of operating a fuel-powered vehicle heating appliance (14), in which during a starting procedure in a first starting phase of predetermined duration an electrically energisable heating assembly (24,26) is operated and, in a second starting phase upon expiry of the first starting phase, an ignitible fuel/air mixture is provided for the start of combustion, wherein the starting procedure is started with the first starting phase in the presence of starting information,
**characterised in that**, upon expiry of the first starting phase, a transition into the second starting phase only occurs when transition-enabling information is present.

2. A method according to Claim 1,
**characterised in that** if, upon expiry of the time of predetermined duration, the transition-enabling information is not present the first starting phase is continued at maximum until expiry of an extension time interval.

3. A method according to Claim 2,
**characterised in that** if, upon expiry of the time of predetermined duration, the transition-enabling information is not present the first starting phase is continued until the transition-enabling information is present.

4. A method according to Claim 2 or 3,
**characterised in that**, upon expiry of the extension time interval without the presence of the transition-enabling information, the energising of the electrically energisable heating assembly (24,26) is terminated.

5. A method according to any one of Claims 1 to 4,
**characterised in that** the starting information comprises information to the effect
that a vehicle door (46) has been unlocked and/or
- that a vehicle door (46) has been opened and/or
- that a vehicle seat (38) has been occupied and/or
- that a vehicle door (46) has been closed and/or
- that a belt buckle (42) has been fastened.

6. A method according to any one of Claims 1 to 5,
**characterised in that** the transition-enabling information comprises information to the effect
- that a vehicle seat (38) has been occupied and/or
- that a belt buckle (42) has been fastened and/or
- that a vehicle drive unit (12) has been started.

7. A method according to Claim 6,
**characterised in that** if the starting information is present the starting procedure is then only started and/or continued if start-enabling information is present.

8. A method according to Claim 7,
**characterised in that** the start-enabling information comprises information to the effect
- that the temperature of a medium to be heated, preferably a coolant of a vehicle drive unit (12), is below an associated limit temperature and/or
- that the temperature in a vehicle interior (34) is below an associated limit temperature and/or
- that sufficient electric power can be provided by an electric power supply system (52).

## Revendications

1. Procédé pour la commande d'un appareil de chauffage (14) fonctionnant avec du combustible, dans lequel, au cours d'une procédure de démarrage, dans une première phase de démarrage de durée prédéterminée, est actionné un dispositif de chauffage déclenchable électriquement (24, 26) et, dans une deuxième phase de démarrage après l'expiration de la première phase, un mélange combustible/air inflammable est mis à disposition pour le démarrage de la combustion, dans lequel la procédure de démarrage avec la première phase de démarrage est mise en route en présence d'une information de démarrage, **caractérisé en ce qu'**après l'expiration de la première phase de démarrage, le passage à la seconde phase de démarrage ne se fait que lorsqu'une information d'autorisation de poursuite est présente.

2. Procédé selon la revendication 1,
**caractérisé en ce que**, lorsqu'après l'expiration de la durée prédéterminée, l'information d'autorisation de poursuite n'est plus présente, la première phase est poursuivie au maximum jusqu'à l'expiration d'un intervalle de temps de prolongation.

3. Procédé selon la revendication 2,
**caractérisé en ce que**, lorsqu'après l'expiration de la durée prédéterminée, l'information d'autorisation de poursuite n'est pas présente, la première phase de démarrage est poursuivie jusqu'à la présence de l'information d'autorisation de poursuite.

4. Procédé selon la revendication 2 ou 3,
**caractérisé en ce que**, lorsqu'après l'expiration de l'intervalle de durée de prolongation sans présence de l'information d'autorisation de poursuite, la mise sous tension du dispositif de chauffage déclenchable électriquement (24, 26) est terminée.

5. Procédé selon l'une des revendications 1 à 4,
**caractérisé en ce que** l'information de démarrage contient des informations sur les points suivants :
- qu'une portière de véhicule (46) a été déverrouillée ou/et
- qu'une portière de véhicule (46) a été ouverte ou/et
- qu'un siège du véhicule (38) est occupé ou/et
- qu'une portière de véhicule (46) a été fermée ou/et
- qu'une fermeture de ceinture (42) a été verrouillée.

6. Procédé selon l'une des revendications 1 à 5,
**caractérisé en ce que** l'information d'autorisation de poursuite contient des informations concernant les éléments suivants :
- qu'un siège du véhicule (38) a été occupé ou/et
- qu'une fermeture de ceinture (42) a été verrouillée ou/et
- qu'un organe de commande du véhicule (12) a été démarré.

7. Procédé selon la revendication 6,
**caractérisé en ce que**, en cas de présence de l'information de démarrage, la procédure de démarrage n'est mise en route ou/et n'est poursuivie que lorsqu'une information d'autorisation de démarrage est présente.

8. Procédé selon la revendication 7,
**caractérisé en ce que** l'information d'autorisation de démarrage comprend les informations suivantes :
- que la température d'un agent à réchauffer, de préférence d'un agent réfrigérant d'un organe de commande de véhicule (12), se situe au-dessous d'une température limite préconisée ou/et
- que la température dans un espace interne du véhicule (34) se situe au-dessous d'une température limite préconisée ou/et
- que le système d'alimentation d'énergie électrique (52) peut fournir suffisamment d'énergie électrique.
